# EUROPEAN PATENT APPLICATION

(11) **EP 3 034 578 A1**
(43) Date of publication of application: **22.06.2016**
(21) Application number: 14836708.9
(22) Date of filing: 25.07.2014
(51) Int. Cl.: C09K 3/18, C09D 5/03, C09D 135/02, C09D 163/00, C09D 175/04, B82Y 30/00

(54) **POWDERED POLYMER COMPOSITION FOR A SUPERHYDROPHOBIC COATING AND METHOD FOR PRODUCING A SUPERHYDROPHOBIC COATING**

(30) Priority: 16.08.2013 RU 2013138377
(71) Applicant: Radchenko, Igor Leonidovich, St. Petersburg 198261 (RU); Radchenko, Elena Vladimirovna, St. Petersburg 198261 (RU); Vaganov, Gleb Vyacheslavovich, St. Petersburg 195427 (RU); Vilesov, Alexandr Dmitrievich, St. Petersburg 197046 (RU)
(72) Inventor: Radchenko, Igor Leonidovich, St. Petersburg 198261 (RU); Radchenko, Elena Vladimirovna, St. Petersburg 198261 (RU); Vaganov, Gleb Vyacheslavovich, St. Petersburg 195427 (RU); Vilesov, Alexandr Dmitrievich, St. Petersburg 197046 (RU)
(74) Representative: Jeck, Anton
(86) International application number: PCT/RU2014/000561
(87) International publication number: WO 2015/023213

(57) **Abstract**

The invention relates to the field of chemistry, and more particularly to a powdered polymer composition for a superhydrophobic coating and a method for producing such a coating. The composition contains a base in the form of a powdered thermosetting composition with an epoxy polyester, epoxy, polyester or polyurethane film-forming agent, and additionally contains a modifier in the form of hydrophobic particles of a surface-modifying and texturing component with particle sizes from 5 nm to 35 µm, in the following ratio: 95-99.5 wt% base; 0.5-5 wt% modifier. The method for producing a coating involves applying the above-mentioned composition to a surface and curing the applied coating by heating at a temperature of 180-190°C for 15-20 minutes. If necessary, a second layer containing micro- and nano-sized hydrophobic particles is applied to the uncured layer of composition. The invention provides a superhydrophobic coating with improved reliability and durability.

## Description

The invention relates to chemistry, in particular to polymer powder compositions (hereinafter PPC) for superhydrophobic coatings and methods for producing superhydrophobic coatings, which can be used for the protection of various structures and constructions operating in the open air and exposed to precipitation such as rain, snow, and fog against icing, corrosion, inorganic and, in some cases, organic contaminants, adhesion, and biofouling. It can prevent a water condensation on various surfaces.

Said technical problem is particularly relevant for such countries (Russia being one of them) where winters last nearly six or more months a year. For example, glaze and rime ice depositions on surfaces disrupt production processes; hinder assembly operations; weigh down constructions, sometimes resulting in their breakage; create operational hazards; and cause an increase in labor costs on removing the snow and ice adhered to such surfaces. Prevention of a water condensation may be important for heating/cooling systems.

Superhydrophobic coatings have a number of unique functional properties, such as water resistance, ability to reduce or prevent water condensation, glaze and rime ice deposits, corrosion resistance, resistance to biofouling and contamination with inorganic and, in some cases, organic compounds. These qualities make them useful as deicing, self-cleaning, anti-corrosion, and antifouling coatings. There are three properties characteristic of superhydrophobic coatings: the contact angle created by a droplet of water on their surface exceeds 150 °; the roll-off angle, i.e. the angle between the slanted surface and the horizon, at which a droplet begins to slide down, does not exceed ten degrees; and self-decontamination of the surface upon contacting with water droplets.

Superhydrophobic state is known to be achieved only on rough surfaces with low surface energy, whereupon heterogeneous wetting takes place. In other words, the three main characteristics of superhydrophobicity can be achieved if the following requirements are met: first, the surface layer must have low surface energy (be hydrophobic) and second, there must be a micro- and nanorough surface. A special feature of such superhydrophobic surfaces is that less than 10% of the aqueous medium actually comes in contact with the solid body, whereas the remaining surface of the liquid is separated from the substrate by a thin film of air. Thus, ice is either not formed on superhydrophobic coatings at all, or the force of adhesion of ice to such surfaces is insignificant.

There are several deicing methods: thermal, mechanical, and chemical and physical.

Thermal and mechanical deicing methods are often inefficient, labor-consuming, requiring the use of additional expensive equipment and results in a significant increase in the cost of construction and operation of the facilities and structures exposed to icing.

The physical and chemical methods are aimed at solving two problems:
- reduction in glaze and rime ice depositions (hereinafter GRID) by preventing/hindering the transition of supercooled water droplets falling on structural elements into a solid state and their subsequent removal from the surface with gravitational forces;
- reduction in water and GRID adhesion to the metal surface, which also facilitates the removal of GRID by its own weight or wind load.

One of the simplest solutions to the first problem is known to be the use of antifreeze-containing varnish, paint, and composite materials. Varnish and paint materials are selected in such a way that the water-insoluble film-forming agent does not hinder the diffusional exchange between antifreeze (mostly chlorides of mono- and bivalent metals) and water. The concentration of antifreeze is required to be the highest possible. Depending on the type of the antifreeze and the degree of its encapsulation by the film-forming agent, the temperature of ice formation is reduced by dozens of degrees [Yakovlev A.D., Chemistry and Technology of Varnish and Paint Coatings, St. Petersburg, 2008, p. 448; [RU 2177797].

A more attractive practical application is the reduction of water and GRID adhesion to the surface being protected from icing. The problem of adhesion reduction can be solved by using liquid or solid hydrophobic anti-adhesive coatings that separate the surface from GRID. High viscosity silicon lubricants, petroleum jelly, which are organic, organosilicon or fluorinated liquids thickened with fine fillers, are often used as liquid anti-adhesives. When coated onto metals (e.g. aluminum), they reduce adhesion dozens of times. Liquid adhesives are effective because the contact between the surface and GRID inside the liquid film, which has weak intermolecular interactions, is broken by the cohesion mechanism. Lubricants, however, as well as the aforementioned antifreeze-containing coatings are expandable materials that require multiple repeated applications [Farzaneh M., Volat C, Leblond A. Anti-icing and Deicing Techniques for Overhead Lines / In: Atmospheric Icing of Power Networks. Ed. by M. Farzaneh, Springer Science + Business Media B.V. 2008, p. 229-268;]. Atmospheric ice is usually formed from supercooled water droplets. In order to adhere to the surface at the first stage of ice formation, these droplets moisten the surface replacing the air interphase space with the aqueous interphase space. This process can only be avoided if the surface is perfectly smooth, which is practically unattainable.

Another way to reduce the adhesion of ice to the surface is to apply film-former-based polymeric materials with low surface energy or by hydrophobization of regular (not water repellant) surfaces.

There are known "icephobic" coatings made of polytetrafluoroethylene (poly(tetrafluoroethylene, PTFE, or Teflon) or polydimethylsiloxane (poly(dimethylsiloxane, silicone, or PDMS). PTFE has been shown to be effective against wet snow adhesion. Wet snow and ice adhesions are, however, different from each other and thus, the use of PTFE coatings is rather limited [EP 339583, WO 200164810, JP 4045168, CN 101707103, US 2006281861, JP 2003027004, US 20120045954].

Silicon-based polymers are known to show better results in the prevention of ice adhesion than PTFE [US 2003232941, US 2012058330, US 2003232201, EP 1849843, JP 2003155348, JP 2003147202, JP 10204340]. A silicone-epoxy coating by Wear-Ion (USA) is known in the art. The adhesion reduction factor of this commercial product is 12, while Teflon's is only 2. Hybrid coatings based on mixed polysiloxane and fluorocarbon polymers are known to yield coatings with better properties than those of PDMS or PTFE. For example, lithium-modified poly(perfluorialkyl) methacrylates (Boeing Company) Byrd N.R. (2004) Polysiloxane (amide-ureide) anti-ice coating [US 6797795] reduce adhesion by 25 points more than PTFE.

All in all, analysis of numerous available relatively smooth anti-adhesive coatings [Menini R., Farzaneh M. Advanced Icephobic Coatings, J. Adhesion Sci. Technol. 201 1,V. 25, P. 971-992], which could potentially be "icephobic", led to the conclusion that such materials can significantly reduce the amount of energy needed to remove GRID from the surface thereof, but at the same time, they do not prevent ice-formation.

Such materials are relatively effective when GRID are formed from wet or dry snow. Such coatings, however, are less effective when used against depositions from freezing rain or rain falling on a supercooled surface. Even though the droplets significantly contract on the smooth hydrophobic surface, they however, maintain a larger than zero contact area and, sooner or later, will freeze at any negative temperature of the substrate (several seconds, if the temperature is below -10°C) [Mishchenko L., Hatton B., Bahadur V, et al. Design of Ice-free Nanostructured Surfaces Based on Repulsion of Impacting Water Droplets // Nanoletters. 2010, V.4. >12. P. 7699-7707].

Superhydrophobic coatings are one of the most promising solutions in battling such GRID as freezing rain or ice rime [Varanasi K., Deng T., Smith J, Hsu M. Frost formation and ice adhesion on superhydrophobic surfaces // Applied physics letters. 2010. V. 97. 234102; [US20100225546].

Traditionally, materials and coatings are considered to be hydrophobic if the water or aqueous solution contact angle is larger than 90°. It should also be noted that hydrophobicity is a property that is defined not so much by the characteristics of the material as a whole but by the properties and structure of the surface layer, which is several nanometers thick.

It is known that hydrophobicity can be only somewhat increased by altering the chemical composition of the top layer of smooth surfaces. The maximum attainable contact angle for smooth surfaces about 106°. In order to obtain superhydrophobic materials with the contact angle exceeding 140°, the combined effect of the roughness and chemical structure of the surface must be utilized. It is precisely by selecting the right surface texture that superhydrophobicity can be achieved [Boynovich L.B., Yemelianko A.M. Hydrophobic Materials and Coatings; Principles of Production, Properties, and Application// Uspekhi Khimii. 2008, T77, pp 619-638]. Water droplets bounce off superhydropobic surfaces upon striking it so fast that they have no time to harden. Thus, virtually no icing takes place.

Thermosetting powder paints (hereinafter TPP) used for the protection of surfaces against weather impact are known in the art. There are several types of film-forming agents: epoxy, epoxy-polyester, polyester, polyurethane, etc. paints.

Protective paint coatings, which are analogs to the product of the present invention, are known in the art. They are disclosed in patents RU2296147 "Protective Decorative Paint"; RU2162872 "Hydrophobic Anti-icing Composition" and comprise a silicone polymer, a filler and a hardener (chloroparaffin); and in RU2387682, a destruction-resistant epoxy composition, wherein the epoxy resin in the amount of 20% - 80% is used as a substrate.

The closest analog to the present invention is a polymer powder composition for superhydrophobic coatings, which is a powder paint for coatings comprising a hard polyester resin, a hard epoxy resin, pigments, fillers, a filling control unit, and a curing catalyst, which is disclosed in patent RU2178436, 1998.12.08, C09D5/03.

One of the disadvantages of the known composition is the short lifespan of the obtained coating under severe weather conditions.

The closest analog to the present invention, which is a method for the preparation of a superhydrophobic coating, is the method for the preparation of hydrophobic coatings comprising synthesis of an acrylic polymer, combining said acrylic polymer with a silicone resin and silicate nanoparticles, which had been modified with organosilane, followed by the application thereof onto aluminum plates by spraying (US20100314575 A1). Said process yields a hydrophobic surface (contact angle about 160°). The disadvantages of the present method include low wear resistance and short life of the resulting hydrophobic layer. Moreover, with use, the deicing capacity of the coating declines due to the gradual deterioration of the rough surface of the superhydrophobic layer.

The objective of the present invention is to provide a novel PPC for superhydrophobic coatings and to provide a novel method for the preparation of superhydrophobic coatings that can protect constructions and structures from water condensation, corrosion, glaze and rime ice depositions, contamination with inorganic and, in some cases, organic compounds, and fouling with various microorganisms and algae.

The technical result of the invention is to improve the quality and physical and mechanical properties, namely, to improve the hydrophobicity of the coating and as a result, achieve a superhydrophobic state and thereby increase the reliability and durability of the coating.

The set objective is solved as follows: PPC for superhydrophobic coatings comprise a substrate, wherein said substrate contains a thermosetting powder composition (hereinafter TPC) comprising an epoxy polyester, epoxy, polyester, or polyurethane film-forming agent and additionally, a modifier, which consists of hydrophobic particles of the component modifying and structuring the surface, having a particle size from 5 nm to no more than 35 mcm, with the following component ratio in wt. %:

| | |
|---|---|
| Substrate (aforementioned TPC) | 95% - 99.5% |
| Modifier | 0.5% - 5% |

The resulting PPC can be used as a substrate for preparing coatings with high contact angles, about 150° - 165°, rolling-off angles not exceeding 4°, and high physical and mechanical properties such as: adhesion - 1 point; tensile strength - about 8 mm; impact strength (direct/reverse) - about 100/100 cm, and hardness - about 2H - 4H.

Hydrophobic microparticles of polytetrafluoroethylene (no larger than 5 mcm) including microparticles of the PTFE Lubrizol Lanco 1890 resin modified with surfactants (no larger than 35 nm), a mixture of micro- and nanoparticles of PTFE (ranging in size from 5 nm to no more than 5 mcm) and PTFE hydrophobic nanoparticles of aluminum oxide Al₂O₃ (with a particle size no larger than 20 nm) and/or silicon dioxide SiO₂ (no larger than 10 nm in size) at a 10:1 to 100:1 particle ratio by weight, respectively, can be used as modifiers.

The method for the preparation of superhydrophobic coatings comprises applying the PPC and curing the resulting coating, wherein the surface to be protected is coated with the PPC, wherein said PPC comprises a TPC with an epoxy polyether, epoxy, polyester, or polyurethane film-forming agent as the substrate, and additionally, a modifier, which consists of hydrophobic particles of the component that modifies and structures the surface, having a particle size from 5 nm to no more than 35 mcm, with the following component ratio in wt. %: substrate - 95 - 99.5%, modifier - 0.5% -5.0%; followed by curing the applied layer by heating at 180°C - 190°C for 15-20 min., and optionally, before said layer has cured, a second layer consisting of a modifier comprising a mixture of hydrophobic micro- and nanoparticles of polytetrafluoroethylene and nanopraticles of aluminum oxide A1₂O₃ and/or silicon dioxide SiO₂ in a 10: 1 to 100: 1 ratio by weight, respectively, is applied, followed by curing the double-layer coating at 185°C -190°C for 15-20 min.; the resulting coating has a contact angle in the 150° -165° range and a roll-off angle not exceeding 4°. The second layer can be a modifier comprising micro- and nanoparticles of PTFE or a modification thereof with a particle size not exceeding 5 mcm, or a modifier comprising hydrophobic microparticles of PTFE modified with surfactants having particles no larger than 5 mcm in size, or a modifier comprising hydrophobic micropartices of the PTFE Lubrizol Lanco 1890 resin with a particle size not exceeding 35 mcm.

The powder composition is applied by electrostatic or tribostatic methods.

The invention is carried out as follows: the method for the preparation of a PPC for a superhydrophobic coating comprises the following steps: premixing the substrate with hydrophobic particles of the modifier in a certain predetermined ratio; loading the resulting mixture into a blender, and mixing thereof to obtain a homogeneous composite.

In order to obtain a superhydrophobic coating, the surface to be protected is coated with the obtained PPC by electrostatic or tribostatic spraying, for example, and the resulting coating is then cured by heating to 180°C -190°C for 15-20 min.; optionally, before said layer is cured, a second layer consisting of a modifier is applied, wherein the resulting coating has the following characteristics:
Contact angle - about 150° -165°
Sliding angle - no more than 4°
Adhesion ~ 1 point
Tensile strength - about 8 mm
Impact strength (direct/reverse) - about 100/100 cm;
Hardness - about 2H - 4H.

1^{st} component: the substrate - is a commercially available TPC such as epoxy, epoxy polyester, polyester, polyurethane.
2^{nd} component: a component modifying and structuring the surface. It consists of hydrophobic micron and nanoparticles such as perfluoropolyethylene (Teflon or PTFE), modified polytetrafluorethylene (particle size no more than 5 mcm), a PTFE wax (particle size no more than 35 mcm), surface-modified silica nanoparticles SiO₂ (particle size no more than 10 nm) aluminum oxide A1₂O₃ (particle size no more than 20 nm).

Using the combination of said components has not been reported in the literature.

The inventors found and experimentally confirmed that the use of the combination of known components in a certain ratio leads to a new qualitative result: the contact angle of the hydrophobic surface reaches about 150° -165° and the roll-off angle is no more than 4°.

Below are examples of PPC compositions and the study of the characteristics of the obtained coatings (Table 1).

**Example 1.** Composition for comparison with no modifying components.

An epoxy-polyester TPC is electrostatically sprayed onto an aluminum plate, cured at 190° for 15 min to yield a coating 80-100 mcm thick.

**Example 2.** 98.5 g of the epoxy-polyester TPC is mixed in a blender with 1.5 g (1.5 wt.%) of PTFE (particle size no more than 5 mcm).

The obtained PPC was electrostatically sprayed onto an aluminum plate and cured at 190° for 15 min. yielding an 80-100 mcm thick coating.

**Example 3.** Same as Example 2, but the TPC content is 99 g, and PTFE is 1 g (1 wt.%).

**Example 4.** Same as Example 2, but the TPC content is 98 g, and PTFE is 2 g (2 wt.%).

**Example 5.** Preparing the PPC as in Example 2, but using an epoxy TPC and curing at 180° for 20 min.

**Example 6.** Same as Example 2, but the TPC used is a polyester TPC.

**Example 7.** Same as Example 2, but the TPC used is a polyurethane TPC.

**Example 8.** Preparing the PPC as in Example 2, but using PTFE modified with the FluroliteSAS brand surfactant.

**Example 9.** Same as Example 2, but using Lubrizol Lanco 1890 PTFE wax (particle size no more than 35 mcm).

**Example 10.** Preparing the PPC as in Example 2, but instead of PTFE, using a combination of micron PTFE particles and hydrophobic nanoparticles of silicon dioxide SiO₂ in the following ratio: 1,485 g of PTFE and 0.015 g of silicon dioxide (particle size about 7 nm).

**Example 11.** Preparing the PPC as in Example 2, but instead of PTFE, using a combination of micron PTFE particles and hydrophobic nanoparticles of silicon dioxide SiO₂ in the following ratio: 1,364 g of PTFE and 0.136 g of silicon dioxide (particle size about 7 nm).

**Example 12.** Preparing the PPC as in Example 2, but instead of PTFE, using a combination of micron PTFE particles and hydrophobic nanoparticles of aluminum oxide A1₂O₃ (manufactured by Evonic, particle size about 13 nm) in the following ratio: 1,485 g of PTFE and 0.015 g of aluminum oxide.

**Example 13.** Preparing the PPC as in Example 2, but instead of PTFE, using a combination of micron PTFE particles and hydrophobic nanoparticles of aluminum oxide Al₂O₃ (manufactured by Evonic, particle size about 13 nm) in the following ratio: 1,364 g of PTFE and 0.136 g of aluminum oxide.
The combination of hydrophobic particles was used to improve the wear resistance of the superhydrophobic layer.

**Example 14.** Same as Example 2, but after the electrostatic application of the PPC, a second layer of the PTFE-4 micron powder premixed with hydrophobic nanoparticles of SiO₂ (particle size about 7 nm) at the ratio of 1.5 g of silica per 98.5 g of PTFE (1.5 wt.%) is electrostatically sprayed over the PPC (particle size no more than 5 nm). The thickness of the layer is 1 to 40 mcm. The second layer of PTFE with hydrophobic nanoparticles is applied to improve the hydrophobicity and to increase the stability of the superhydrophobic layer.

**Example 15.** Same as Example 2, but after the electrostatic application of the PPC, a second layer of the PTFE-4 micron powder) premixed with hydrophobic nanoparticles of Al₂O₃ (particle size about 13 nm) at the ratio of 1.5 g of alumina per 98.5 g of PTFE (1.5 wt.%) is electrostatically sprayed over the PPC (particle size no more than 5 nm. The thickness of the layer is 1 to 40 mcm. The second layer of PTFE with hydrophobic nanoparticles is applied to improve the hydrophobicity and to increase the stability of the superhydrophobic layer.

The physical and mechanical properties of the coatings were tested in accordance with the existing regulations.

Adhesion was determined by the cross-cut test according to GOST 15140-78. The coating was assessed on a four-point scale.

The strength on impact was determined according to GOST 4765-73 on a U-2 instrument. The method involves using the U-2 instrument to measure the maximum height (in cm), from which a 1 kg load freely falls on a painted metal plate without causing any mechanical damage to the paint coat. The strength on impact was determined from the direction of the coating (direct) and the direction of the substrate (reverse).

Determination of tensile strength on an Erichsen tester.

Testing was conducted according to GOST 29039-92. The method is based on the measurement of the depth of extrusion on a painted metal plate at the time of destruction of the coating upon exposure to a spherical punch, 20 mm in diameter.

Pencil hardness was determined in accordance with ISO 15184-1998. The method consists of scratching the coating with a pencil of certain hardness at a 45° angle and a 750 g load and evaluating the results.

The pencils used in the test were as follows:

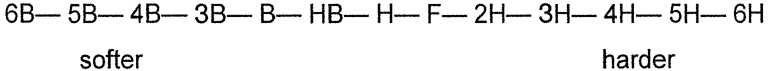

The contact angle was determined by the Spreading Droplet Method. The contact angle and the roll-off angle were measured on a DSA30 Kruss analyzer. The contact angle was determined by the Sessile Drop Technique. The method for determining the contact angle consists of placing a droplet of liquid (water) on the tested coating and directly measuring the angle on a light microscope. The method for measuring the roll-off angle consists of determining the minimum angle at which a droplet of water of a known volume dropped from a predetermined height rolls off the surface. To determine the contact angle and the roll-off angle, 30 µ-volume droplets of distilled water were dropped from a dispenser onto the tested surface from the height of 7 mm.

Stability of the superhydrophobic layer in the course of freezing/thawing cycles was evaluated by the changes in the contact and roll-off angles after 5 freezing/thawing cycles. Each freezing/thawing cycle was conducted as follows: a sample with the tested coating was placed for 10 min into a climatic chamber cooled to -20°C. The cooled sample was then placed into a bath filled with water cooled to 0°C. The sample was then removed from the bath and held in the climatic chamber at the same temperature for 10 min. After 5 such freezing/thawing cycles, the contact angle and the roll-off angle were measured. Table 1 summarizes the test data.

**Table 1**

| Testing the Properties of Superhydrophobic Coatings | | | | | |
|---|---|---|---|---|---|
| Sample # | Properties | | | | |
| | Pencil hardness | Elasticity per Erichsen, mm | Strength on impact (direct/reverse), cm | Adhesion, points | Contact angle, ° |
| 1 | 2H | 8 | 100/100 | 1 | 73 |
| 2 | 2H | 8 | 100/100 | 1 | 142 |
| 3 | 3H | 8 | 100/100 | 1 | 133 |
| 4 | 2H | 8 | 100/100 | 1 | 163 |
| 5 | 3H | 8 | 100/100 | 1 | 140 |
| 6 | 2H | 8 | 100/100 | 1 | 145 |
| 7 | 4H | 7 | 100/80 | 1 | 142 |
| 8 | 3H | 8 | 100/100 | 1 | 150 |
| 9 | 2H | 8 | 100/100 | 1 | 152 |
| 10 | 3H | 7 | 100/80 | 1 | 150 |
| 11 | 4H | 7 | 100/80 | 1 | 150 |
| 14 | 3H | 8 | 100/100 | 1 | 165 |
| 15 | 3H | 8 | 100/100 | 1 | 163 |

**Table 2**

| Contact Angle and Roll-Off Angle of the Tested Coatings Before and After Testing for Resistance to Freezing/Thawing | | | | | |
|---|---|---|---|---|---|
| # | Material | Roll-off angle, ° | Contact angle, ° | After 5 freezing/thawing cycles | |
| | | | | Roll-off angle, ° | Contact angle, ° |
| 1 | PPC superhydrophobic coating containing PTFE (Example 4) | 3-4 | 163 | 20 | 142 |
| 2 | PPC superhydrophobic coating containing a mixture of PTFE and SiO₂ nanoparticles (example 10) | 4-5 | 150 | 15 | 147 |
| 3 | PPC superhydrophobic coating containing a second PTFE layer with hydrophobic nanoparticles (Example 14) | 2-3 | 165 | 2-3 | 165 |

The data from Tables 1 and 2 show that adding PTFE to the PPC results in a significantly increased contact angle, which reaches 163° (superhydrophobic coatings) when the content of PTFE is 2 wt.%. Furthermore, the physical and mechanical properties of the coatings virtually stay the same and remain at a high level (same as the coatings obtained from unmodified TPC (Example 1). It is noteworthy that the addition of PTFE and hydrophobic nanoparticles of silicon dioxide to PPC has very little effect on the contact angle but increases the hardness of the coating (up to 4H per pencil). After 5 freezing/thawing cycles, however, superhydrophobic properties of the coatings decline. For example, for the coating sample prepared from the PTFE-containing PPC, the roll-off angle changes from 3° - 4° (prior to the freezing/thawing experiment) to 20° (after the experiment). The contact angle also goes down from 163° to 142°. When hydrophobic SiO₂ nanoparticles are added to the PPC along with PTFE, the coating's resistance after freezing/thawing cycles increases. Moreover, it is only when the second layer comprising PTFE combined with nanoparticles of silica is applied to the powder coating premixed with the micron PTFE powder and hydrophobic nanoparticles, that the contact angle and roll-off angle of the coating (see Table 2, sample #3, Example 14) do not change after the freezing/thawing cycles and remain 165° and 2°-3° respectively. Increased hydrophobicity and stability of the superhydrophobic coating coated with the second layer is attributed to the increased content of hydrophobic particles on the surface of the coating. Thus, due to the modification with powdered PTFE containing nanoscale additives, the inexpensive TPC coatings can be used as expensive superhydrophobic coatings.

The present invention may be used for the protection of various constructions and structures operating in the open air and exposed to precipitation such as rain, snow, and fog against icing, corrosion, inorganic and, in some cases, organic contaminants, adhesion, and biofouling. It can also be used to prevent surfaces from water condensation for various constructions and engineering systems.

## Claims

1. A polymer powder composition for producing superhydrophobic coatings comprising a substrate, wherein said substrate comprises a thermosetting powder composition with an epoxy polyester, epoxy, polyester, or polyurethane film-forming agent and additionally, a modifier consisting of hydrophobic particles of the component that modifies and structures the surface, having a particle size from 5 nm to no more than 35 mcm, with the following component ratio in wt. %:
| | |
|---|---|
| Substrate | 95% - 99.5% |
| Modifier | 0.5% - 5% |

2. The composition according to claim 1, wherein the modifier consists of hydrophobic micro- and nanoparticles of PTFE or a modification thereof with a particle size not exceeding 5 mcm.

3. The composition according to claim 1, wherein the modifier consists of hydrophobic microparticles of PTFE modified with surfactants with a particle size no more than 5 mcm.

4. The composition according to claim 1, wherein the modifier consists of hydrophobic microparticles of Lubrizol Lanco 1890 PTFE wax with a particle size 35 mcm.

5. The composition according to claim 1, wherein the modifier is a mixture of hydrophobic micro- and nanoparticles of PTFE and hydrophobic nanoparticles of aluminum oxide Al₂O₃ and/or silicon dioxide SiO₂ at a 10:1 to 100:1 ratio by weight, respectively.

6. A method for the preparation of a superhydrophobic coating comprising application of a polymer powder composition and curing the resulting coating, wherein the surface to be protected is coated with the composition according to claim 1, wherein said composition comprises a thermosetting powder composition with an epoxy polyester, epoxy, polyester, or polyurethane film-forming agent as a substrate and further comprises a modifier consisting of hydrophobic particles of the component that modifies and structures the surface, with a particle size ranging from 5 nm to no more than 35 nm in the following component ratio in wt. %:
| | |
|---|---|
| Substrate | 95% - 99.5% |
| Modifier | 0.5% - 5% |
followed by curing the coating by heating at 180°C - 190°C for 15-20 min., and optionally, before said layer is cured, a second layer consisting of a modifier comprising a mixture of hydrophobic micro- and nanoparticles of PTFE and nanopraticles of aluminum oxide A1₂O₃ and/or silicon dioxide SiO₂ in a 10: 1 to 100: 1 ratio by weight, respectively, is applied, followed by curing the double-layer coating at 185°C -190°C for 15-20 min.; wherein the resulting coating has a contact angle in the 150° -165° range and a roll-off angle no more than 4°.

7. The method according to claim 6, wherein the second layer is a modifier comprising hydrophobic micro- and nanoparticles of PTFE or a modification thereof with a particle size not exceeding 5 mcm.

8. The method according to claim 6, wherein the second layer is a modifier comprising hydrophobic microparticles of PTFE modified with surfactants with a particle size not exceeding 5 mcm.

9. The method according to claim 6, wherein the second layer is a modifier comprising hydrophobic microparticles of Lubrizol Lanco 1890 PTFE wax with a particle size not exceeding 35 mcm.

10. The method according to claim 6, wherein the powder composition is applied using electrostatic or tribostatic methods.
